# EUROPEAN PATENT APPLICATION

(11) **EP 4 787 780 A1**
(43) Date of publication of application: **05.08.2026**
(21) Application number: 24870618.6
(22) Date of filing: 20.09.2024
(51) Int. Cl.: H04L 12/10, G06F 1/26, H02J 13/00

(54) **POWER SOURCE DEVICE AND BASE STATION**

(30) Priority: 25.09.2023 CN 202311243145
(71) Applicant: HUAWEI TECHNOLOGIES CO., LTD., Shenzhen 518129 (CN)
(72) Inventor: LIU, Xin, Shenzhen, Guangdong 518129 (CN); XIAO, Zhiming, Shenzhen, Guangdong 518129 (CN); XU, Feixiang, Shenzhen, Guangdong 518129 (CN); ZHAO, Xiaodong, Shenzhen, Guangdong 518129 (CN); ZHONG, Shaohua, Shenzhen, Guangdong 518129 (CN)
(74) Representative: Gill Jennings & Every LLP
(86) International application number: PCT/CN2024/120106
(87) International publication number: WO 2025/067074

(57) **Abstract**

This application provides a power device and a base station, so that a port matching a terminal device can be selected, that is, a matching relationship between the port and the terminal device can be determined. This reduces a workload, and avoids unnecessary losses caused by mistaken turn-off of the terminal device. The power device may include a first bus, a plurality of inductors, a plurality of collection units, a plurality of switches, a plurality of ports, and a controller. The plurality of inductors, the plurality of collection units, the plurality of switches, and the plurality of ports are in a one-to-one correspondence. Each of the plurality of ports may be connected to the first bus through the collection unit and the inductor. Each of the plurality of switches may be connected between the first bus and the port. Each collection unit may be configured to: collect an output current of the port and transmit the output current to the controller. The controller may be configured to: select, from the plurality of ports based on respective output currents of the plurality of ports, a first port that is in a power supply state for the terminal device, transmit an alternating current signal to the terminal device by controlling switches corresponding to first ports to be sequentially turned on, and select, based on an obtained amplitude of the alternating current signal and address information of the terminal device, a port matching the terminal device.

## Description

This application claims priority to Chinese Patent Application No. 202311243145.X, filed with the China National Intellectual Property Administration on September 25, 2023, and entitled "POWER DEVICE AND BASE STATION", which is incorporated herein by reference in its entirety.

### TECHNICAL FIELD

This application relates to the field of power supply technologies, and more specifically, to a power device and a base station.

### BACKGROUND

With the rapid development of 4G and 5G communication technologies, power consumption of a base station increases greatly. The base station may include a plurality of terminal devices such as a remote radio unit and a base band unit, and the plurality of terminal devices may be powered by a power device. To reduce total power consumption of the base station, in a related technology, a circuit breaker like an air switch is usually mounted on a power supply cable between the power device and the terminal device, to turn off some terminal devices, so as to implement energy saving of the base station. However, because there are a large quantity of terminal devices, and the power supply cable is long (even up to 150 meters), it is difficult to obtain a model of the terminal device, and a matching relationship between a port of the power device and the terminal device cannot be determined. The matching relationship between the port and the terminal device needs to be manually collected, which is labor-intensive and complex. In addition, in a process of turning off some terminal devices, unnecessary losses are easily caused due to mistaken turn-off of the terminal device.

Therefore, a technical solution in which the matching relationship between the port and the terminal device can be determined, to reduce a workload and avoid mistaken turn-off of the terminal device is urgently needed.

### SUMMARY

This application provides a power device and a base station, so that a port matching a terminal device can be selected, that is, a matching relationship between the port and the terminal device can be determined. This reduces a workload, and avoids unnecessary losses caused by mistaken turn-off of the terminal device.

According to a first aspect, this application provides a power device, and the power device may be configured to supply power to a plurality of terminal devices. The power device may include a first bus, a plurality of inductors, a plurality of collection units, a plurality of switches, a plurality of ports, and a controller.

The plurality of inductors, the plurality of collection units, the plurality of switches, and the plurality of ports are in a one-to-one correspondence. In other words, quantities of inductors, collection units, switches, ports, and the controllers may be equal.

Optionally, each of the plurality of ports may be connected to the first bus through the collection unit and the inductor. In other words, the collection unit and the inductor may be located between the port and the first bus. Each of the plurality of switches may be connected between the first bus and the port.

Further, each of the plurality of collection units may be configured to: collect an output current of the port and transmit the output current to the controller.

The controller may be configured to select, from the plurality of ports based on respective output currents of the plurality of ports, a first port that is in a power supply state for the terminal device. In other words, the first port may indicate a port that is in the plurality of ports and that is in a power supply state for the terminal device. It may be figured out that the power device may include the plurality of ports, and each port may supply power to one terminal device. However, in a scenario in which the port is not connected to the terminal device, the port may be in an idle state. The controller may be further configured to: transmit an alternating current signal to the terminal device by controlling switches corresponding to first ports to be sequentially turned on, and select, based on an obtained amplitude of the alternating current signal and address information of the terminal device, a port matching the terminal device.

Each of the plurality of inductors may be configured to suppress transmission of the alternating current signal, transmitted by the switch, to the first bus. It may be figured out that, because different power devices may be connected to a same bus, or different power devices share a ground terminal, the inductor may prevent transmission of the alternating current signal to another power device through the bus or the ground terminal, to avoid crosstalk signals to the another power device.

The power device provided in this application can supply power to the plurality of terminal devices through the plurality of inductors, the plurality of collection units, the plurality of switches, the plurality of ports, and the controller, and can select, from the plurality of ports in a power supply process, the port matching the terminal device. In other words, a matching relationship between the port and the terminal device can be determined. This reduces a workload, and avoids unnecessary losses caused by mistaken turn-off of the terminal device.

In a possible implementation, the controller may be specifically configured to select, from the plurality of ports, a port whose output current is greater than a preset current threshold as the first port. It can be understood that a port whose output current is less than or equal to the preset current threshold may be in an idle state in which the port does not perform power supply to any terminal device.

The controller may be further configured to: control the switches corresponding to the first ports to be sequentially turned on, transmit, through the first port, the alternating current signal to each terminal device through the switch corresponding to the first port, and obtain an amplitude of the alternating current signal and the address information of the terminal device. In other words, when the switch corresponding to the first port is turned on, the switch may couple the alternating current signal to the first port, and then each terminal device may have an amplitude of the alternating current signal.

The controller may be further configured to: select, from the plurality of first ports based on the address information, a port injected by the alternating current signal corresponding to a maximum amplitude among amplitudes of a plurality of alternating current signals as the port matching the terminal device.

In another possible implementation, the power device further includes at least one capacitor pair, and the capacitor pair may be connected to the switch.

The capacitor pair may be configured to couple the alternating current signal to a port corresponding to the switch through the switch.

Further, the power device may further include at least one transceiver. The transceiver may be connected to the controller, and may be further connected to the capacitor pair.

The transceiver may be configured to: transmit the alternating current signal to the capacitor pair, and couple the alternating current signal to the port through the capacitor pair.

It may be figured out that, because the capacitor has a function of direct current block and alternating current pass, the capacitor pair may further prevent coupling of a direct current, from the first bus, to the transceiver.

In an example, the alternating current signal may be a power line carrier (power line carrier, PLC) signal (which may be referred to as a PLC signal for short). Certainly, the alternating current signal may alternatively be another signal. This is not limited in this application.

In another example, any one of the plurality of collection units may be a sensor, a transformer, or a shunt. Certainly, the collection unit may alternatively be of another type. This is not limited in this application.

Optionally, an inductance and a type of any one of the plurality of inductors may be selected based on a frequency of the alternating current signal.

For example, any one of the plurality of switches may be a relay or a contactor. Certainly, the switch may alternatively be of another type. This is not limited in this application.

In a possible implementation, the first bus may include a first positive bus and a first negative bus. The switch may include a first node, a second node, and a third node. The first node may be configured to receive an alternating current signal. The second node may be configured to connect between the first negative bus and the port. The third node may be configured to connect between the first positive electrode bus and the port.

Further, a connection relationship between the port, the inductor, the switch, the first positive bus, and the first negative bus may meet: The port is connected to the first positive bus through the inductor, and the third node is connected between the inductor and the port; or the port is connected to the first negative bus through the inductor, and the second node is connected between the inductor and the port. In other words, the connection relationship between the port, the inductor, the switch, the first positive bus, and the first negative bus may meet either of the foregoing two examples.

For example, the terminal device may be a remote radio unit or a base band unit. In other words, the power device provided in this application may supply power to the remote radio unit or the base band unit. Certainly, the terminal device may alternatively be another device. This is not limited in this application.

According to a second aspect, this application provides a base station, and the base station may include a plurality of terminal devices and the power device provided in the first aspect and the possible implementations of the first aspect. The power device may be connected to each of the plurality of terminal devices, and is configured to supply power to each terminal device.

Each power device is configured to: obtain a direct current from a second bus and provide the direct current for each power device in the plurality of power devices.

For example, the base station may include a plurality of power devices. All the plurality of power devices each may be connected to the second bus. In other words, all the power devices may be connected to a same bus. Alternatively, all the power devices may share a ground terminal.

It can be figured out that, when the base station includes the plurality of power devices and each power device supplies power to the plurality of terminal devices, after obtaining amplitudes of alternating current signals output by the first ports, the controller of the power device may select first ports outputting the alternating current signals with amplitudes greater than a preset amplitude threshold as candidate matching ports, and then select, from the candidate matching ports, a port injected by the AC signal corresponding to a maximum amplitude as a port matching the terminal device. In this way, a selection range of the first port is narrowed down, so that a port that may be a candidate matching port in another terminal device can be excluded, to improve matching efficiency between the port and the terminal device.

It should be understood that the technical solution in the second aspect of this application is consistent with that in the first aspect of this application, and beneficial effect achieved by the aspects and the corresponding feasible implementations is similar. Details are not described again.

### BRIEF DESCRIPTION OF DRAWINGS

To describe technical solutions in this application or in the conventional technology more clearly, the following briefly describes accompanying drawings for describing embodiments or the conventional technology. It is clearly that the accompanying drawings in the following descriptions show some embodiments of this application, and a person of ordinary skill in the art may still derive other accompanying drawings from these accompanying drawings without creative efforts.
FIG. 1 is a diagram of a structure of a power device 100 according to an embodiment of this application;
FIG. 2 is a flowchart of implementing, by a controller, matching between a terminal device and a port according to an embodiment of this application;
FIG. 3 is another diagram of a structure of a power device 100 according to an embodiment of this application;
FIG. 4 is another diagram of a structure of a power device 100 according to an embodiment of this application;
FIG. 5 is another diagram of a structure of a power device 100 according to an embodiment of this application; and
FIG. 6 is a diagram of a structure of a base station 10 according to an embodiment of this application.

### DESCRIPTION OF EMBODIMENTS

The following describes technical solutions of this application with reference to accompanying drawings.

To make objectives, technical solutions, and advantages of this application clearer, the following clearly and completely describes the technical solutions in this application with reference to the accompanying drawings in this application. It is clear that described embodiments are some rather than all of embodiments of this application. All other embodiments obtained by a person of ordinary skill in the art based on embodiments of this application without creative efforts shall fall within the protection scope of this application.

In the specification, embodiments, claims, and accompanying drawings of this application, the terms "first", "second", and the like are merely intended for distinguishing and description, and shall not be understood as indicating or implying relative importance, or indicating or implying a sequence. In addition, the terms "include", "have", and any variant thereof are intended to cover non-exclusive inclusion, for example, include a series of steps or units. For example, methods, systems, products, or devices are not necessarily limited to those steps or units expressly listed, but may include other steps or units not expressly listed or inherent to such processes, methods, products, or devices.

It should be understood that in this application, "at least one (item)" means one or more, and "a plurality of" means two or more. The term "and/or" is used for describing an association relationship between associated objects, and indicates that three relationships may exist. For example, "A and/or B" may indicate the following three cases: Only A exists, only B exists, and both A and B exist, where A and B may be singular or plural. The character "/" generally represents an "or" relationship between the associated objects. The expression "at least one of the following items (pieces)" or a similar expression means any combination of these items, including a single item (piece) or any combination of a plurality of items (pieces). For example, at least one of a, b, or c may indicate a, b, c, a and b, a and c, b and c, or a, b, and c, where a, b, and c may be singular or plural.

With the rapid development of 4G and 5G communication technologies, power consumption of a base station increases greatly. The base station may include a plurality of terminal devices such as a remote radio unit and a base band unit, and the plurality of terminal devices may be powered by a power device. To reduce total power consumption of the base station, in a related technology, a circuit breaker like an air switch is usually mounted on a power supply cable between the power device and the terminal device, to turn off some terminal devices, so as to implement energy saving of the base station. However, because there are a large quantity of terminal devices, and the power supply cable is long (even up to 150 meters), it is difficult to obtain a model of the terminal device, and a matching relationship between a port of the power device and the terminal device cannot be determined. The matching relationship between the port and the terminal device needs to be manually collected, which is labor-intensive and complex. In addition, in a process of turning off some terminal devices, unnecessary losses are easily caused due to mistaken turn-off of the terminal device.

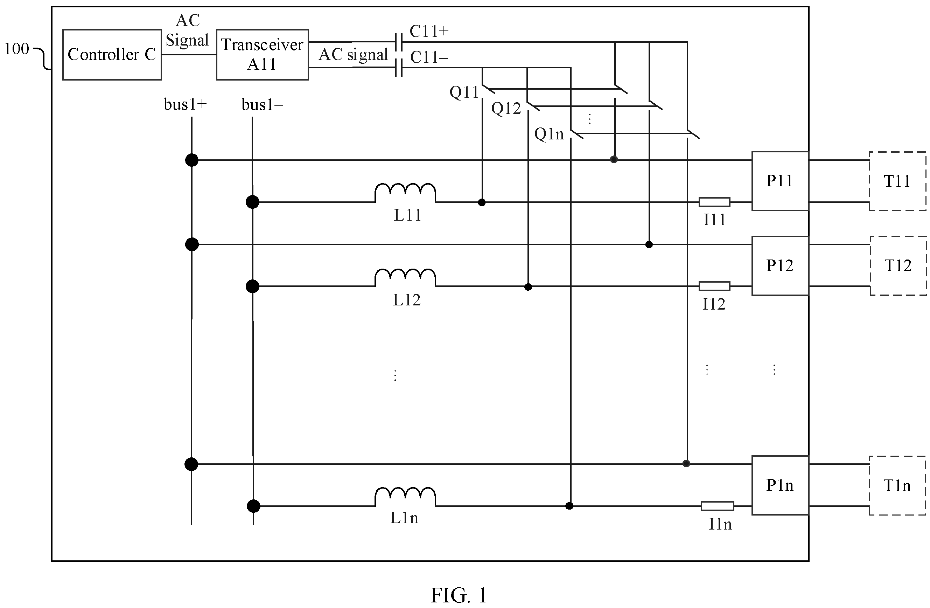

To overcome the foregoing disadvantages, an embodiment of this application provides a power device, and the power device may be configured to supply power to a plurality of terminal devices T. As shown in FIG. 1, the power device 100 may include a first bus, a plurality of inductors, a plurality of collection units, a plurality of switches, a plurality of ports, and a controller C. The controller C may be connected to the plurality of switch units and the plurality of collection units, to control turn-off and turn-on of the switch units and implement communication with the collection units.

The plurality of inductors, the plurality of collection units, the plurality of switches, and the plurality of ports are in a one-to-one correspondence. In other words, quantities of inductors, collection units, switches, ports, and the controllers C may be equal.

The first bus includes a first positive bus bus1+ and a first negative bus bus1-. The plurality of inductors may include n inductors in total: an inductor L11, an inductor L12, ..., and an inductor L1n. The plurality of collection units may include n collection units in total: a collection unit I11, a collection unit I12, ..., and a collection unit I1n. The plurality of switches may include n switches in total: a switch Q11, a switch Q12, ..., and a switch Q1n. The plurality of ports may include n ports in total: a port P11, a port P12, ..., and a port P1n. The plurality of terminal devices may include n terminal devices in total: a terminal device T11, a terminal device T12, ..., and a terminal device T1n. It may be understood that each port may supply power to one terminal device, and a quantity of terminal devices may be less than a quantity of ports. In the embodiment provided in FIG. 1 of this application, an example in which the quantity of terminal devices is equal to the quantity of ports is used for description.

Optionally, each of the n ports may be connected to the first bus (which may be the first positive bus bus1+ or the first negative bus bus1-) through the corresponding collection unit and the corresponding inductor. In other words, the collection unit and the inductor may be located between the port and the first bus (which may be the first positive bus bus1+ or the first negative bus bus1-). Each switch may be connected between the first bus (which may be the first positive bus bus1+ and the first negative bus bus1-) and the port.

Further, each collection unit (for example, the collection unit I11) may be configured to: collect an output current of the port (for example, the port P11) and transmit the output current to the controller C.

The controller C may be configured to: select, from the port P11 to the port P1n based on respective output currents of the port P11 to the port P1n, a first port that is in a power supply state for the terminal device (for example, the terminal device T11 and the terminal device T12).

In other words, the first port may indicate a port that is in the port P11 to the port P1n and that is in a power supply state for the terminal device. It may be figured out that, in a scenario in which the port is not connected to the terminal device, the port may be in an idle state, that is, the port is not the first port.

The controller C may be further configured to: transmit an alternating current (alternating current, AC) signal (which may be referred to as an AC signal for short) to the terminal device T11 to the terminal device T1n by controlling switches corresponding to first ports to be sequentially turned on, and select, based on an obtained amplitude of the AC signal of the terminal device and address information of the terminal device, a port matching the terminal device.

Each inductor (for example, the inductor L11) may be configured to suppress transmission of the AC signal, transmitted by the switch (for example, the switch Q11), to the first bus (namely, the first positive bus bus1+ or the first negative bus bus1-).

It may be figured out that, because different power devices may be connected to a same bus, or different power devices share a ground terminal, that is, a plurality of power devices supply power to a plurality of terminal devices, the inductor (for example, the inductor L11) may prevent transmission of the AC signal to another power device through the bus (namely, the first positive bus bus1+ and the first negative bus bus1-) or the ground terminal, to avoid crosstalk signals to the another power device. Therefore, the inductors L11 to L1n may be referred to as decoupling inductors.

The power device 100 provided in this embodiment of this application can supply power to the plurality of terminal devices through the plurality of inductors, the plurality of collection units, the plurality of switches, the plurality of ports, and the controller C, and can select, from the plurality of ports in a power supply process, the port matching the terminal device. In other words, the power device 100 provided in this embodiment of this application can determine a matching relationship between the port and the terminal device. This reduces a workload, and avoids unnecessary losses caused by mistaken turn-off of the terminal device.

In some embodiments, the controller C may be specifically configured to select, from the port P11 to the port P1n, a port whose output current is greater than a preset current threshold as the first port. It can be understood that a port whose output current is less than or equal to the preset current threshold may be in an idle state in which the port does not perform power supply to any terminal device.

For example, if the output current of the port P11 is greater than the preset current threshold, the port P11 may be the first port.

For example, there may be one or more first ports. The following describes in different cases:

Case 1: When there is one first port (for example, the port P11 is used as the first port), the first port is a port matching the terminal device T11.

Case 2: When there are a plurality of first ports, the controller C may be configured to: control switches corresponding to the first ports to be sequentially turned on, transmit, through the first port, the AC signal to each terminal device through the switch corresponding to the first port, and obtain an amplitude of the AC signal and address information of the terminal device. In other words, when the switch corresponding to the first port is turned on, the switch may couple the AC signal to the first port.

It may be understood that, because the port P11 to the port P1n are all connected to the first bus, in a case in which one switch is turned on, the terminal device 11 to the terminal device T1n each have an amplitude of the AC signal.

For example, the port P11 and the port P12 are first ports. Therefore, the controller C may control the switch Q11 (namely, a switch corresponding to the port P11) to be turned on, couple the AC signal to the port P11 through the switch Q11, and obtain respective amplitudes of the AC signals and respective address information of the terminal device T11 and the terminal device T12.

The controller C may further control the switch Q12 (namely, a switch corresponding to the port P12) to be turned on, couple the AC signal to the port P12 through the switch Q12, and obtain respective amplitudes of the AC signals and respective address information of the terminal device T11 and the terminal device T12.

Further, the controller C may be further configured to: select, from the plurality of first ports based on the address information of each terminal device, a port injected by the AC signal corresponding to a maximum amplitude among amplitudes of a plurality of AC signals as the port matching the terminal device. It can be learned that the power device 100 may determine the matching relationship between the terminal device T11 and the port P11 through the controller C.

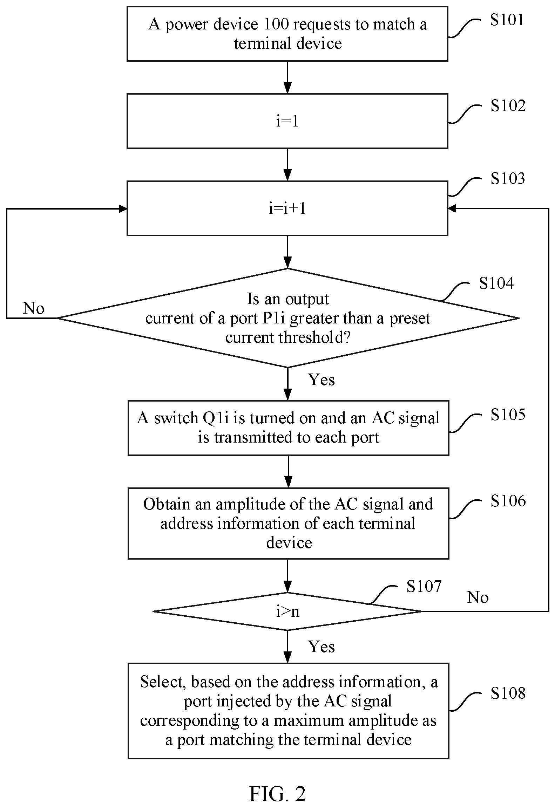

Specifically, as shown in FIG. 2, that the controller C controls the switch to be turned on to implement matching between a terminal device and a port may be implemented by performing the following steps.

Step S101: The power device 100 requests to match the terminal device.

Step S102: Set an initial value of a port P1i to 1, where i=1, 2, ..., n.

Step S103: Perform i=i+1.

Step S104: Determine whether an output current of the port P1i is greater than a preset current threshold, and if yes, perform step S105; otherwise, return to step S103.

Step S105: The controller C controls a switch Q1i to be turned on and transmits an AC signal to each port.

Step S106: Obtain an amplitude of the alternating current signal and address information of each terminal device.

Step S107: Determine whether i>n, and if yes, perform step S108; otherwise, return to step S103.

Step S108: Select, based on the address information, a port injected by the AC signal corresponding to a maximum amplitude among amplitudes of a plurality of AC signals as a port matching the terminal device.

In some other embodiments, as shown in FIG. 1, the power device 100 may further include a capacitor pair. The capacitor pair includes a capacitor C11+ and a capacitor C11-. The capacitor C11+ and the capacitor C11-may be connected to the switch. In the terminal device 100 shown in FIG. 1, because there is only one AC signal, the capacitor C11+ and the capacitor C11- may be connected to each of the switch Q11 to the switch Q1n.

The capacitor C11+ and the capacitor C11- may be configured to couple the AC signal to the port P11 to the port P1n through the switch Q11 to the switch Q1n.

It may be understood that, when there are the plurality of AC signals, the power device 100 may include a plurality of capacitor pairs. The plurality of capacitor pairs one-to-one correspond to the plurality of AC signals. Each of the plurality of capacitor pairs may be connected to one or more switches, provided that each AC signal can be coupled to a port corresponding to the switch through the switch. This is not limited in this embodiment of this application.

As shown in FIG. 1, the power device 100 may further include a transceiver A11. An input end of the transceiver A11 may be connected to the controller C, and an output end of the transceiver A11 may be connected to the capacitor C11+ and the capacitor C11-.

The transceiver A11 may be configured to: transmit the AC signal from the controller C to the capacitor C11+ and the capacitor C11-, and couple the AC signal to the port P11 to the port P1n through the capacitor C11+ and the capacitor C11-.

It may be figured out that, because the capacitor has a function of direct current block and alternating current pass, the capacitor C11+ and the capacitor C11- may further prevent transmission of a direct current, from the first bus, to the transceiver A11.

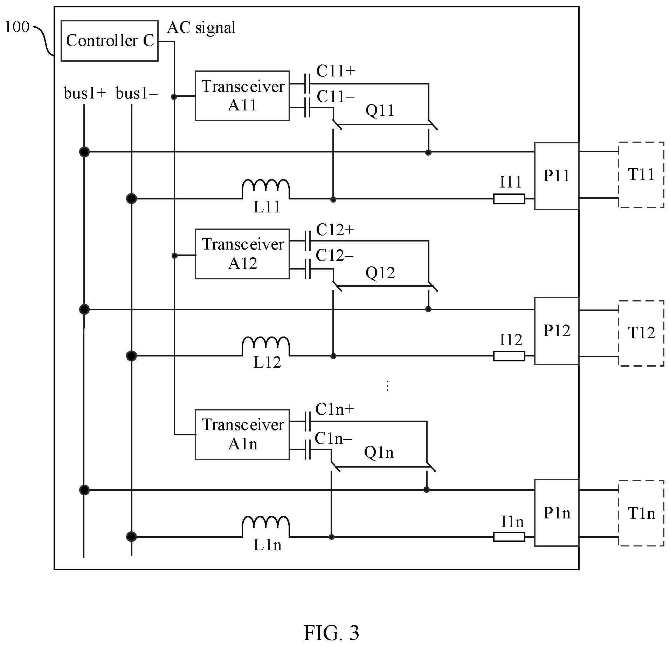

In a possible implementation, the power device 100 may include a plurality of capacitor pairs and a plurality of transceivers, as shown in FIG. 3. The plurality of capacitor pairs may include 2n capacitors in total: the capacitor C11+, the capacitor C11-, a capacitor C12+, a capacitor C12-, ..., a capacitor C1n+, and a capacitor C1n-. The plurality of transceivers include n transceivers in total: the transceiver A11, a transceiver A12, ..., and a transceiver A1n. The n transceivers are configured to transmit n AC signals.

Optionally, each transceiver may be connected between the port and the first bus through the corresponding capacitor and the corresponding switch.

For example, the transceiver A11 may be connected between the port P11 and the first positive bus bus1+ through the capacitor C11+ and the switch Q11, and may be further connected between the port P11 and the first negative bus bus1- through the capacitor C11- and the switch Q11.

For another example, the transceiver A12 may be connected between the port P12 and the first positive bus bus1+ through the capacitor C12+ and the switch Q12, and may be further connected between the port P12 and the first negative bus bus1- through the capacitor C12- and the switch Q12.

For another example, the transceiver A1n may be connected between the port P1n and the first positive bus bus1+ through the capacitor C1n+ and the switch Q1n, and may be further connected between the port P1n and the first negative bus bus1- through the capacitor C1n- and the switch Q1n.

It can be learned that, in the power device 100 shown in FIG. 3, the n transceivers, the n capacitor pairs, the n switches, and the n ports are connected in a one-to-one correspondence. The controller C may control turn-on of the switch to couple the AC signal to the port. The controller C may further control the switch to be in a normally-on state and control start of the transceiver, or may couple the AC signal to the port.

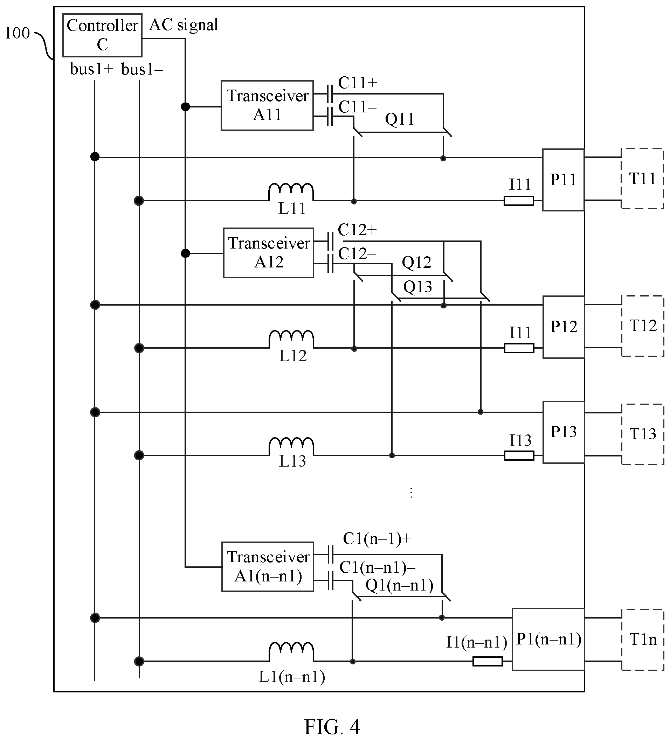

In another possible implementation, the power device 100 may also include a plurality of capacitor pairs and a plurality of transceivers, as shown in FIG. 4. Same as FIG. 3, the power device 100 shown in FIG. 4 also includes n switches in total from the switch Q11 to the switch Q1n. A difference from FIG. 3 lies in that the power device 100 in FIG. 4 includes n-n1 transceivers and n-n1 capacitor pairs, where n1 represents a difference between a quantity of transceivers in FIG. 3 and a quantity of transceivers in FIG. 4. In this case, some transceivers (which may be one or more) in the n-n1 transceivers may provide an AC signal for one or more ports.

For example, in FIG. 4, the transceiver A11 may be connected between the first bus and the port P11 through the capacitor C11+, the capacitor C11-, and the switch Q11. In this case, the controller C may control turn-on of the switch Q11 to couple the AC signal to the port P11. Certainly, the controller C may further control the switch Q11 to be in a normally-on state and control start of the transceiver A11 to couple the AC signal to the port P11.

For another example, in FIG. 4, the transceiver A12 may be connected between the first bus and the port P12 through the capacitor C12+, the capacitor C12-, and the switch Q12, and the transceiver A12 may also be connected between the first bus and the port P13 through the capacitor C13+, the capacitor C13-, and the switch Q13. In this case, the controller C may couple the AC signal to the port P12 by controlling turn-on of the switch Q12, and may couple the AC signal to the port P13 by controlling the switch Q13. Certainly, the controller C may further couple the AC signal to the port P12 by controlling the switch Q12 to be in a normally-on state and controlling start of the transceiver A12, and couple the AC signal to the port P13 by controlling the switch Q13 to be in a normally-on state and controlling start of the transceiver A12.

For another example, the transceiver A1(n-n1) may be connected between the first bus and the port P1(n-n1) through the capacitor C1(n-n1)+, the capacitor C1(n-n1)-, and the switch Q1(n-n1). In this case, the controller C may couple the AC signal to the port P1(n-n1) by controlling turn-on of the switch Q1(n-n1). Certainly, the controller C may further control the switch Q1(n-n1) to be in a normally-on state and control start of the transceiver A1(n-n1) to couple the AC signal to the port P1(n-n1).

In an example, the AC signal may be a power line carrier (power line carrier, PLC) signal (which may be referred to as a PLC signal for short). Certainly, the AC signal may alternatively be another signal. This is not limited in this embodiment of this application.

In another example, any one of the collection unit I11 to the collection unit I1n (for example, the collection unit I11) may be a sensor, a transformer, or a shunt. Certainly, the collection unit I11 to the collection unit I1n may alternatively be of another type. This is not limited in this embodiment of this application. In this embodiment of this application, each of the collection unit I11 to the collection unit I1n may be a sensor.

In another example, any one of the switches Q11 to Q1n may be a relay or a contactor. Certainly, the Q11 to the switch Q1n may alternatively be of another type. This is not limited in this embodiment of this application. In this embodiment of this application, each of the switch Q11 to the switch Q1n may be a relay.

Optionally, an inductance and a type of any one of the inductors L11 to L1n may be selected based on a frequency of the AC signal. The inductance and the type of the inductor L11 to the inductor L1n are not limited in this embodiment of this application.

In some embodiments, each of the switch Q11 to the switch Q1n may include a first node, a second node, and a third node. In FIG. 1, the first node is a node connected to the capacitor pair, and may be configured to receive an alternating current signal. The second node may be configured to connect between the first negative electrode bus bus1- and the port. The third node may be configured to connect between the first positive electrode bus bus1+ and the port.

For example, for the switch Q11, the first node may be a node connect the capacitor C11+ and the capacitor C11-, the second node may be connected between the first negative electrode bus bus1- and the port P11, and the third node may be connected between the first positive electrode bus bus1+ and the port P11.

For example, each collection unit may be located between the corresponding port and the first positive electrode bus bus1+, or may be located between the corresponding port and the first negative electrode bus bus1-.

For example, the collection unit I11 may be located between the port P11 and the first positive bus bus1+, or the collection unit I11 may be located between the port P11 and the first negative bus bus1-. This is not limited in this embodiment of this application. In this embodiment of this application, the collection unit I11 to the collection unit I1n each are located between the corresponding port and the first negative bus bus1-, as shown in FIG. 1.

Further, a connection relationship between the port P11 to the port P1n, the inductor L11 to the inductor L1n, the switch Q11 to the switch Q1n, the first positive bus bus1+, and the first negative bus bus1- may meet either of the following two cases.

Case 1: The port is connected to the first positive bus bus1+ through the inductor, and the third node is connected between the inductor and the port.

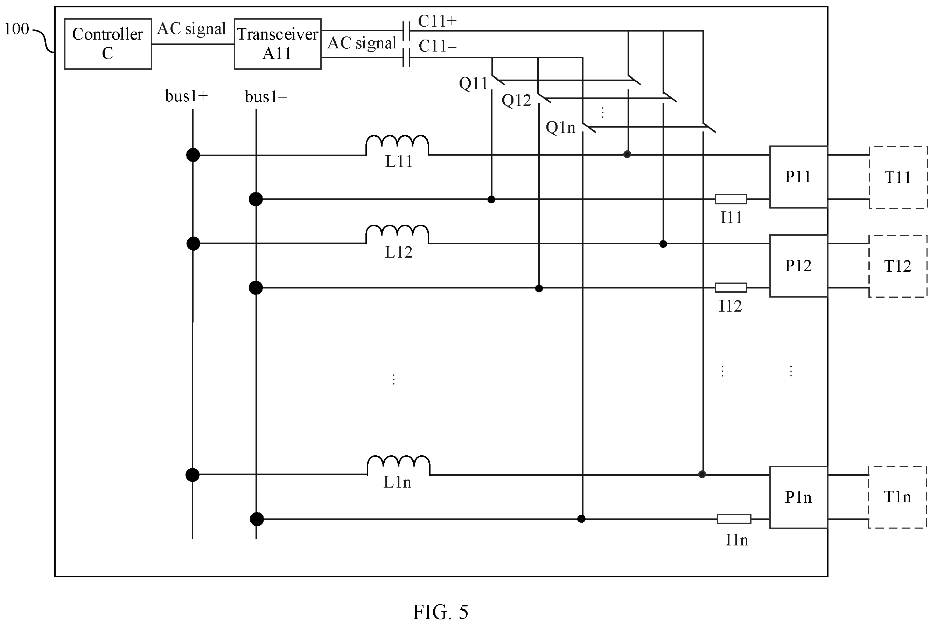

For example, the port P11 may be connected to the first positive bus bus1+ through the inductor L11, and the third node of the switch Q11 may be connected between the inductor L11 and the port P11, as shown in FIG. 5.

For another example, the port P12 may be connected to the first positive bus bus1+ through the inductor L12, and the third node of the switch Q12 may be connected between the inductor L12 and the port P12, as shown in FIG. 5.

For another example, the port P1n may be connected to the first positive bus bus1+ through the inductor L1n, and the third node of the switch Q1n may be connected between the inductor L1n and the port P1n, as shown in FIG. 5.

In FIG. 5, the port P11 to the port P1n are connected to the first negative bus bus1- through the corresponding collection unit I11 to the corresponding collection unit I1n respectively. Respective second nodes of the switch Q11 to the switch Q1n are connected between the first negative bus bus1- and the port P11 to the port P1n.

Case 2: The port is connected to the first negative bus bus1- through the inductor, and the second node is connected between the inductor and the port.

For example, the port P11 may be connected to the first negative bus bus1- through the inductor L11, and the second node of the switch Q11 may be connected between the inductor L11 and the port P11, as shown in FIG. 1, FIG. 3, and FIG. 4.

For another example, the port P12 may be connected to the first negative bus bus1- through the inductor L11, and the second node of the switch Q12 may be connected between the inductor L12 and the port P12, as shown in FIG. 1, FIG. 3, and FIG. 4.

For another example, the port P1n may be connected to the first negative bus bus1- through the inductor L1n, and the second node of the switch Q1n may be connected between the inductor L1n and the port P1n, as shown in FIG. 1, FIG. 3, and FIG. 4.

In FIG. 1, FIG. 3, and FIG. 4, the port P11 to the port P1n are connected to the first negative bus bus1-through the corresponding collection unit I11 to the corresponding collection unit I1n respectively. Respective third nodes of the switch Q11 to the switch Q1n are connected between the first positive bus bus1+ and the port P11 to the port P1n.

It can be learned from FIG. 1 to FIG. 5 that the inductor may be located on a branch between the port and the first positive bus bus1+, or may be located on a branch between the port and the first negative bus bus1-. Similarly, the collection unit may be located on a branch between the port and the first positive bus bus1+, or may be located on a line between the port and the first negative bus bus1-. This is not limited in this embodiment of this application.

In some embodiments, any one of the terminal device T11 to the terminal device T1n may be a remote radio unit (remote radio unit, RRU), a base band unit (base band unit, BBU), or the like. In other words, the power device 100 provided in this embodiment of this application may supply power to the RRU or the BBU. Certainly, the terminal device 100 may alternatively be another device powered through a cable, for example, a router. This is not limited in this embodiment of this application.

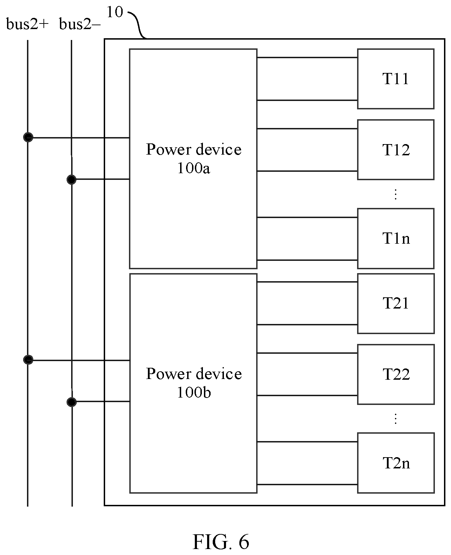

An embodiment of this application further provides a base station 10, as shown in FIG. 6. The base station 10 may include a plurality of terminal devices and a plurality of power devices. The plurality of terminal devices may include the terminal device T11 to the terminal device T1n, a terminal device T21 to a terminal device T2n, and the like. The plurality of power devices may include a power device 100a, a power device 100b, and the like.

The power device 100a and the power device 100b may be connected to a second bus. The second bus includes a second positive bus bus2+ and a second negative bus bus2- in FIG. 6. In other words, the power device 100a and the power device 100b may be connected to a same bus. Certainly, in addition to being connected to the same bus, the power device 100a and the power device 100b may alternatively share a ground terminal. In this embodiment of this application, an example of being connected to the same bus is used for description.

For example, the power device 100a may be connected to the terminal device T11 to the terminal device T1n, and is configured to: obtain a direct current from the second bus and provide the direct current for each of the terminal device T11 to the terminal device T1n.

Similarly, the power device 100b may be connected to the terminal device T21 to the terminal device T2n, and is configured to: obtain a direct current from the second bus and provide the direct current for each of the terminal device T21 to the terminal device T2n.

Certainly, a quantity of terminal devices powered by the power device 100a may be different from a quantity of terminal devices powered by the power device 100b. In this embodiment of this application, an example in which the quantity of terminal devices powered by the power device 100a may be the same as the quantity of terminal devices powered by the power device 100b is used for description.

It can be figured out that, when the base station 10 includes the plurality of power devices and each power device supplies power to the plurality of terminal devices, after obtaining amplitudes of alternating current signals output by the first ports, the controller C of the power device may select first ports outputting the alternating current signals with amplitudes greater than a preset amplitude threshold as candidate matching ports, and then select, from the candidate matching ports, a port injected by the AC signal corresponding to a maximum amplitude as a port matching the terminal device. In this way, a selection range of the first port is narrowed down, so that a port that may be a candidate matching port in another terminal device can be excluded, to improve matching efficiency between the port and the terminal device, so as to improve working efficiency and reliability of the base station.

For the base station 10 shown in FIG. 6, a correspondence between AC signal injection, the power device 100a, and the power device 100b is shown in Table 1.

**Table 1**

| AC signal injection | | | | Power device 100a | | | | Power device 100b | | | |
|---|---|---|---|---|---|---|---|---|---|---|---|
| Switch Q11 | Switch Q12 | ... | Switch Q1n | Terminal device T11 | Terminal device T12 | ... | Terminal device T1n | Terminal device T21 | Terminal device T22 | ... | Terminal device T2n |
| Inject | / | / | / | A111 | A121 | ... | A1n1 | A211 | A221 | ... | A2n1 |
| / | Inject | / | / | A112 | A122 | ... | A1n2 | A212 | A222 | ... | A2n2 |
| / | / | ... | / | ... | ... | ... | ... | ... | ... | ... | ... |
| / | / | / | Inject | A11n | A12n | ... | A1nn | A21n | A22n | ... | A2nn |

In Table 1, the power device 100a is used as a main power device that supplies power to the terminal device T11 to the terminal device T1n, and the power device 100b is used as a crosstalk device of the power device 100a. A111 to A11n represent an amplitude of the AC signal of the terminal device T11 (namely, an amplitude of the AC signal output by the port P11 in the terminal device 100a) when the switches Q11 to Q1n in the terminal device 100a are sequentially turned on. A121 to A12n represent an amplitude of the AC signal of the terminal device T12 (namely, an amplitude of the AC signal output by the port P12 in the terminal device 100a) when the switches Q11 to Q1n are sequentially turned on. A1n1 to A1nn represent an amplitude of the AC signal of the terminal device T1n (namely, an amplitude of the AC signal output by the port P1n in the terminal device 100a) when the switches Q11 to Q1n are sequentially turned on.

Similarly, A211 to A21n represent an amplitude of the AC signal of the terminal device T21 (namely, an amplitude of the AC signal output by the port P21 in the terminal device 100b) when the switches Q11 to Q1n in the terminal device 100a are sequentially turned on. A121 to A12n represent an amplitude of the AC signal of the terminal device T22 (namely, an amplitude of the AC signal output by the port P22 in the terminal device 100b) when the switches Q11 to Q1n in the terminal device 100a are sequentially turned on. A2n1 to A2nn represent an amplitude of the AC signal of the terminal device T2n (namely, an amplitude of the AC signal output by the port P2n in the terminal device 100b) when the switches Q11 to Q1n in the terminal device 100a are sequentially turned on.

It can be learned from Table 1 that, turn-on of the switch is controlled, so that the AC signal can be injected to the corresponding port, and amplitudes of AC signals of different terminal devices are compared, so that matching between all ports and corresponding terminal devices can be completed.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A power device, configured to supply power to a plurality of terminal devices, comprising a first bus, a plurality of inductors, a plurality of collection units, a plurality of switches, a plurality of ports, and a controller, wherein the plurality of inductors, the plurality of collection units, the plurality of switches, and the plurality of ports are in a one-to-one correspondence;
each of the plurality of ports is connected to the first bus through the collection unit and the inductor, and each of the plurality of switches is connected between the first bus and the port;
each of the plurality of collection units is configured to: collect an output current of the port and transmit the output current to the controller;
the controller is configured to: select, from the plurality of ports based on respective output currents of the plurality of ports, a first port that is in a power supply state for the terminal device, transmit an alternating current signal to the terminal device by controlling switches corresponding to first ports to be sequentially turned on, and select, based on an obtained amplitude of the alternating current signal and the address information of the terminal device, a port matching the terminal device; and
each of the plurality of inductors is configured to suppress transmission of the alternating current signal, transmitted by the switch, to the first bus.

2. The power device according to claim 1, wherein the controller is configured to:
select, from the plurality of ports, a port whose output current is greater than a preset current threshold as the first port;
control the switches corresponding to the first ports to be sequentially turned on, transmit, through the first port, the alternating current signal to each terminal device through the switch corresponding to the first port, and obtain an amplitude of the alternating current signal and the address information of the terminal device; and
select, from the plurality of first ports based on the address information, a port injected by the alternating current signal corresponding to a maximum amplitude among amplitudes of a plurality of alternating current signals as the port matching the terminal device.

3. The power device according to claim 1 or 2, wherein the power device further comprises at least one capacitor pair, and the capacitor pair is connected to the switch; and
the capacitor pair is configured to couple the alternating current signal to a port corresponding to the switch through the switch.

4. The power device according to claim 3, wherein the power device further comprises at least one transceiver, the transceiver is connected to the controller, and the transceiver is further connected to the capacitor pair; and
the transceiver is configured to transmit the alternating current signal to the capacitor pair.

5. The power device according to any one of claims 1 to 4, wherein the first bus comprises a first positive bus and a first negative bus; and
the switch comprises a first node, a second node, and a third node, wherein the first node is configured to receive the alternating current signal, the second node is configured to connect between the first negative bus and the port, and the third node is configured to connect between the first positive bus and the port.

6. The power device according to claim 5, wherein a connection relationship between the port, the inductor, the switch, the first positive bus, and the first negative bus meets:
the port is connected to the first positive bus through the inductor, and the third node is connected between the inductor and the port; or the port is connected to the first negative bus through the inductor, and the second node is connected between the inductor and the port.

7. The power device according to any one of claims 1 to 6, wherein the alternating current signal is a power line carrier signal.

8. The power device according to any one of claims 1 to 7, wherein any one of the plurality of collection units is a sensor, a transformer, or a shunt.

9. The power device according to any one of claims 1 to 8, wherein any one of the plurality of switches is a relay or a contactor.

10. The power device according to any one of claims 1 to 9, wherein the terminal device is a remote radio unit or a base band unit.

11. A base station, comprising a plurality of terminal devices and the power device according to any one of claims 1 to 10, wherein the power device is connected to each of the plurality of terminal devices.

12. The base station according to claim 11, wherein the base station comprises a plurality of power devices; and
all the plurality of power devices each are connected to a second bus, or all the plurality of power devices share a ground terminal.
